# DEMANDE DE BREVET EUROPEEN

(11) **EP 1 939 469 A1**
(43) Date de publication de la demande: **02.07.2008**
(21) Numéro de dépôt: 07124013.9
(22) Date de dépôt: 21.12.2007
(51) Int. Cl.: F16C 1/26

(54) **Système de commande par câble à gaine améliorée**

(30) Priorité: 29.12.2006 FR 0611564
(71) Demandeur: WAGON SAS, 79302 Bressuire Cédex (FR)
(72) Inventeur: Neaux, Jean-Claude, 79300, TERVES (FR); Chemineau, Nicolas, 85310, CHAILLE SOUS LES ORMEAUX (FR)
(74) Mandataire: Bioret, Ludovic

(57) **Abrégé**

L'invention concerne un système d'actionnement par câble (9) d'un élément mobile dans un véhicule automobile, ledit câble (9) cheminant dans une gaine (1), ladite gaine (1) comportant:
- un élément de maintien rigide géométriquement indéformable (13); et
- au moins une portion de tube souple (14), monté libre en coulissement dans ledit tube rigide (13), ledit câble (9) cheminant dans la ou lesdites portions de tube souple (14).

## Description

### 1. Domaine de l'invention

Le domaine de l'invention est celui de l'automobile. L'invention concerne de façon plus précise l'actionnement d'un élément mobile d'un véhicule automobile à l'aide d'un câble.

### 2. Solutions de l'art antérieur

Un véhicule automobile comporte de très nombreux éléments mobiles. On peut compter parmi ces éléments mobiles certaines des vitres de l'automobile, des stores, des toits ouvrants, les rétroviseurs, etc. Certains de ces éléments mobiles sont avantageusement commandés à distance, par le biais de systèmes d'actionnement.

Parmi les moyens d'actionnement connus, les systèmes d'actionnement à câble sont couramment utilisés. Dans ces systèmes, un câble décrit un trajet entre un élément d'actionnement et un élément mobile. L'élément d'actionnement, qui peut par exemple être une poulie liée à un moteur, exerce une traction ou une poussée sur une extrémité du câble. Cette action est alors transmise à l'autre extrémité du câble, qui peut entraîner un déplacement de l'élément mobile. Un tel système de commande est particulièrement simple et permet un actionnement précis de l'élément mobile.

Dans ces systèmes de commande, le câble circule généralement à travers une gaine, ou un tube, dont les extrémités sont fixées à la structure du véhicule. Le déplacement du câble par rapport à une extrémité de la gaine entraîne alors un déplacement par rapport à l'autre extrémité de la gaine. La position de l'élément mobile est alors liée à la position du câble par rapport à l'extrémité correspondante de la gaine.

Les gaines utilisées sont généralement constituées de matière plastique, rigide ou souple, par exemple en polyamide. Ces gaines ne permettent cependant pas une grande précision de l'actionnement. En effet, ces gaines plastiques peuvent se rétracter ou s'allonger de façon relativement importante, notamment en fonction de la température ou de l'humidité. Lorsque les extrémités de la gaine étant fixées à la structure du véhicule, cette modification de la longueur des gaines peut entraîner une modification de leur trajet

La position du câble par rapport à l'extrémité de la gaine par rapport à l'extrémité de la gaine proche de l'élément mobile peut alors varier, ce qui entraîne une variation de la position de l'élément mobile, et donc modifier son action (par exemple une fermeture ou une ouverture incomplète d'un store ou d'un panneau vitré, ou, pour un câble denté, un décalage d'une ou plusieurs dents).

Pour obtenir une plus grande précision dans l'actionnement, il peut être envisagé d'utiliser une gaine plus rigide et moins déformable, par exemple en acier ou en plastique dur. La longueur de la gaine est alors plus stable et moins sensible aux conditions de température et d'humidité, ce qui entraîne une meilleure précision de l'actionnement. Cependant, le câble passant dans une gaine a tendance, quand le véhicule est soumis à des vibrations, à cogner ou frotter contre les parois de la gaine. Avec des gaines en matériau rigide comme l'acier, ces chocs ou frottements entraînent un bruit qui peut être gênant pour les occupants du véhicule, et qui par conséquent n'est pas acceptable.

### 3. Objectifs de l'invention

L'invention a notamment pour objectif de pallier ces inconvénients de l'art antérieur.

L'invention a en particulier pour objectif de fournir une technique d'actionnement qui soit particulièrement précise.

Un autre objectif de l'invention est de fournir une telle technique d'actionnement dans lequel la position de l'élément mobile actionné n'est pas modifié en fonction de conditions extérieures telles que la température et l'humidité.

L'invention a également pour objectif de fournir une telle technique d'actionnement qui ne génère pas ou peu de bruit gênant dans le véhicule.

Encore un objectif de l'invention est de fournir une telle technique d'actionnement qui soit simple et peu onéreux à fabriquer et à mettre en oeuvre.

### 4. Exposé de l'invention

Ces objectifs, ainsi que d'autres qui apparaîtront par la suite, sont atteints à l'aide d'un système d'actionnement par câble du coulissement d'un élément mobile dans un véhicule automobile, ledit câble cheminant dans une gaine qui comporte, selon l'invention, un élément de maintien rigide comportant un tube ou des éléments de tube géométriquement indéformables, et au moins une portion de tube souple monté libre de coulisser dans ledit tube rigide, ledit câble cheminant libre en coulissement, dans la ou lesdites portions de tube souple.

Ainsi, l'approche nouvelle de l'invention repose sur une combinaison nouvelle d'éléments rigides et d'éléments souples assemblés pour former la gaine, de façon à garantir une longueur invariante de gaine en évitant la génération de bruits indésirables.

De façon avantageuse, ledit élément de maintien rigide est constitué par un tube rigide.

Préférentiellement, ladite gaine comporte au moins une portion de tube souple s'étendant sur une partie de la longueur dudit tube rigide, au moins une des extrémités de ladite portion de tube souple étant laissée libre dans ledit tube rigide.

Ainsi, la longueur de la portion de tube souple peut varier, à l'intérieur de l'élément rigide.

Selon un autre mode de réalisation de l'invention, ledit élément de maintien rigide est constitué de plusieurs pièces de maintien et de guidage liées à une structure rigide.

Dans ce cas, au moins une desdites pièces de maintien est avantageusement une portion de tube rigide.

Selon un mode de réalisation particulier de l'invention, une portion de tube souple unique s'étend sur toute la longueur dudit élément de maintien rigide, un jeu étant ménagé à au moins une des extrémités de ladite portion de tube souple pour permettre une dilatation ou une rétractation libre de ladite portion de tube souple

Ledit élément de maintien rigide peut être constitué de métal et/ou de plastique dur, et ladite ou lesdites portions de tube souple peuvent être constituées de plastique souple.

Selon un mode de réalisation avantageux de l'invention, ledit élément de maintien rigide est formé de deux demi-coquilles assemblées après mise en place de ladite ou lesdites portions de tube souple.

Le montage du système est alors simplifié. Les demi-coquilles peuvent être indépendantes, ou formées directement sur des éléments de structure, par exemple un pavillon de véhicule.

Selon un aspect avantageux de l'invention, le système comprend un élément d'extrémité formant bouchon, traversé par ledit câble, à au moins une des extrémités dudit élément de maintien rigide.

L'invention peut notamment s'appliquer à l'actionnement d'un élément mobile appartenant à la famille comprenant :
- les rétroviseurs,
- les barres de tirage de store,
- les toits ouvrants,
- les baies vitrées.

L'invention concerne également les gaines pour les systèmes d'actionnement tels que décrits ci-dessus, et les véhicules automobiles comprenant au moins un tel système d'actionnement.

### 5. Liste des figures

D'autres caractéristiques et avantages de l'invention apparaîtront plus clairement à la lecture de la description suivante de trois modes de réalisation préférentiels, donnés à titre de simples exemples illustratifs et non limitatifs, et des dessins annexés, parmi lesquels :
- la figure 1 représente de façon schématique le principe de fonctionnement d'un système d'actionnement par câble selon un premier mode de réalisation de l'invention ;
- la figure 2 représente de façon schématique le principe de fonctionnement d'un système d'actionnement par câble selon un deuxième mode de réalisation de l'invention; et
- la figure 3 représente de façon schématique le principe de fonctionnement d'un système d'actionnement par câble selon un troisième mode de réalisation de l'invention.

### 6. Description détaillée de l'invention

### 6.1 Rappel du principe de l'invention

Le principe de l'invention est donc d'utiliser, pour guider le câble du système d'actionnement, une gaine combinant des éléments rigides et des éléments plus souples. Les éléments rigides permettent notamment d'assurer une longueur constante à la gaine, alors que les éléments plus souples permettent d'éviter la génération de bruits lors des chocs et frottements entre la gaine et le câble.

### 6.2 Principe du système de commande par câble

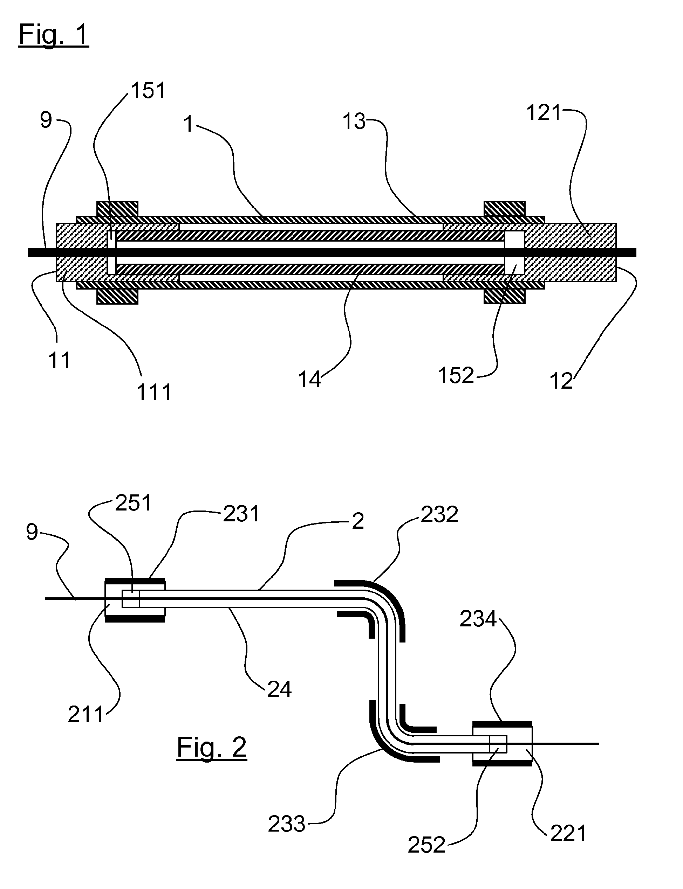

Un mode de réalisation simplifié de l'invention est représenté par la figure 1. Cette figure illustre la gaine 1 dans laquelle circule le câble 9. Le câble 9 peut être, par exemple, un câble métallique à plusieurs brins enroulés, ou câble hélicoïdal. Le câble 9 est actionné, dans les deux sens, par un élément d'actionnement, qui est par exemple situé à proximité d'une première extrémité 11 de la gaine 1. Cet élément d'actionnement permet ainsi de faire varier la position du câble par rapport à cette première extrémité 11 de la gaine.

Selon un mode de réalisation de l'invention, l'élément d'actionnement du câble peut être constitué par un enrouleur lié à moteur ou à une manivelle, et sur lequel s'enroule le câble. L'enrouleur forme une roue dentée, dont les dents coopèrent avec les brins enroulés du câble, pour permettre un contrôle précis (dent par dent si nécessaire) du déplacement du câble. De tels moyens d'actionnement sont en eux-mêmes bien connus de l'homme du métier et ne sont donc pas représentés sur les figures. On rappelle cependant que la précision requise n'est en général pas obtenue, du fait que les variations de longueur de la gaine entraînent des décalages relativement importants.

Le déplacement du câble par rapport à la première extrémité 11 de la gaine entraîne en effet un déplacement par rapport à la seconde extrémité 12. Ce déplacement est utilisé pour actionner un élément mobile du véhicule. L'extrémité du câble 9 peut par exemple être liée à la barre de tirage d'un store (non représentée) alors que la seconde extrémité 12 de la gaine est liée à la structure du véhicule.

Une action sur le câble entraîne alors un déplacement de la barre de tirage par rapport au véhicule. De façon classique, des moyens de rappel peuvent être liés à l'élément mobile pour lui permettre d'exercer à son tour une action sur le câble et de le maintenir tendu quand il est relâché par les moyens d'actionnement. Le déplacement de l'élément mobile est donc entièrement contrôlé par un seul câble. Selon un autre mode de réalisation connu de l'homme du métier, le câble forme une boucle et peut entraîner l'élément mobile dans les deux sens.

### 6.3 Gaine selon un premier mode de réalisation

La gaine 1 comporte selon l'invention un élément de maintien rigide 13, ou vecteur, qui assure la rigidité (absence de variation) de la géométrie de la gaine 1 et qui est lié à la structure du véhicule. Cet élément de maintien rigide peut être constitué par un tube rigide, par exemple en plastique dur ou en métal. Il peut également être constitué de deux coquilles semi-cylindriques pouvant être assemblées pour former un tube.

Aux deux extrémités 11 et 12 de la gaine 1, l'élément de maintien rigide 13 peut être lié à des pièces d'extrémité de gaine, ou bouchons, 111 et 121. La rigidité de l'élément de maintien rigide 13 permet d'assurer que la distance que le câble parcourt dans la gaine entre les pièces d'extrémité de gaine 111 et 121 reste constante quelles que soient les conditions de température et d'humidité.

Un second tube 14, plus souple, est monté dans l'élément de maintien rigide. Ce tube souple 14 est par exemple un tube en matière plastique. Il est traversé par le câble 9 et permet d'éviter que celui-ci ne tape ni ne frotte contre les parois de l'élément de maintien rigide en occasionnant un bruit indésirable.

Ce tube souple 14 est monté libre dans l'élément de maintien rigide 13. Comme le montre la figure 1, ses extrémités sont maintenues en guidage par les pièces d'extrémité de gaine 111 et 121, mais elles peuvent néanmoins coulisser librement dans ces pièces. Ce degré de liberté du tube souple 14, associé à des jeux de dilatation 151 et 152 entre les extrémités du tube souple 14 et les butées des pièces d'extrémité de gaine 111 et 121, permet que le tube souple 14 s'allonge ou se rétracte, en fonction notamment des conditions de température et d'humidité, sans que la longueur de trajet du câble 9 dans la gaine 1 en soit affecté.

### 6.4 Gaine selon un deuxième mode de réalisation

La figure 2 présente un système d'actionnement par câble selon un deuxième mode de réalisation de l'invention. Comme dans le premier mode de réalisation, le câble 9 traverse une gaine 2. Cette gaine 2 est constituée d'un tube souple 24 dans lequel circule le câble 9. Le tube souple 24 est lui-même maintenu par des pièces de maintien 231, 232, 233 et 234. Les pièces de maintien 231 et 234 maintiennent les pièces d'extrémité de gaine respectivement 211 et 221, alors que les pièces de maintien 232 et 233 sont des portions de tube rigide qui sont traversées par le tube souple 24. Ces pièces de maintien sont elles-mêmes fixées à une même structure rigide, non représentée sur la figure, et forment ainsi un élément de maintien rigide.

Il est à noter que le tube souple 24 est monté libre en coulissement dans cet élément de maintien rigide. Les pièces d'extrémité de gaine 211 et 221, qui sont liées à l'élément de maintien rigide et qui maintiennent les extrémités du tube souple 24 laissent en effet un degré de liberté à ces extrémités, et des jeux de dilatation 251 et 252 permettent au tube souple 24 de se dilater et de se rétracter librement.

De la même façon, les pièces de maintien 232 et 233 permettent le coulissement de tube 24. Ces pièces de maintien sont situées de préférence aux endroits de la gaine 2 où le tube souple 24 serait susceptible de se déformer. Elles assurent ainsi une longueur de trajet constant du câble 9 dans la gaine 2, indépendamment de la dilatation ou de la rétractation du tube souple 24. De plus, le câble 9 n'est en contact qu'avec le tube souple 24, et ne risque donc pas d'engendrer un bruit en tapant contre une partie rigide.

### 6.5 Gaine selon un troisième mode de réalisation

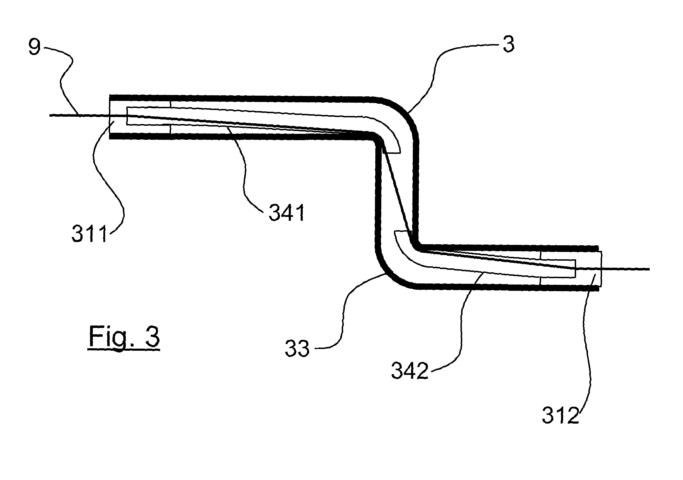

La figure 3 présente un système d'actionnement par câble selon un troisième mode de réalisation de l'invention. Là encore, le câble 9 traverse une gaine 3. Cette gaine 3 est constituée d'un tube rigide 33 formant un élément de maintien rigide. Plusieurs portions de tube souple 341 et 342 sont placées dans le tube rigide, sans nécessairement couvrir toute la longueur de celui-ci. Le câble 9 traverse à la fois le tube rigide 33 et les portions de tube souple 341 et 342.

Ces portions de tube souples 341 et 342 sont montées de façon à pouvoir se dilater ou se rétracter librement : une première de leurs extrémités est maintenue par les pièces d'extrémité de gaine 311 et 312, mais leur deuxième extrémité est laissée libre dans le tube rigide 33. La dilatation ou la rétractation des tubes souples 341 et 342 n'a donc pas d'incidence sur la longueur du trajet du câble 9 dans la gaine 3.

De façon avantageuse, les portions de tube souple 341 sont montées dans le tube rigide 33 aux endroits ou le câble est le plus susceptible de venir taper ou frotter contre le tube rigide 33 et donc d'occasionner un bruit. Il permet donc d'éviter la plus grande partie de ce bruit.

## Revendications

1. Système d'actionnement par câble d'un élément mobile dans un véhicule automobile, ledit câble cheminant dans une gaine,
**caractérisé en ce que** ladite gaine comporte :
- un élément de maintien rigide, comportant un tube ou des éléments de tube géométriquement indéformables ; et
- au moins une portion de tube souple, monté libre en coulissement dans ledit élément de maintien rigide, ledit câble cheminant, libre en coulissement, dans la ou lesdites portions de tube souple.

2. Système d'actionnement selon la revendication 1, **caractérisé en ce que** ledit élément de maintien rigide est constitué par un tube rigide s'étendant sur toute la longueur de ladite gaine.

3. Système d'actionnement selon la revendication 2, **caractérisé en ce que** ladite gaine comporte au moins une portion de tube souple s'étendant sur une partie de la longueur dudit tube rigide, au moins une des extrémités de ladite portion de tube souple étant laissée libre dans ledit tube rigide.

4. Système d'actionnement selon la revendication 1, **caractérisé en ce que** ledit élément de maintien rigide est constitué de plusieurs éléments de tube rigides liées à une structure rigide.

5. Système d'actionnement selon l'une quelconque des revendications 1 à 4, **caractérisé en ce qu'**une portion de tube souple unique s'étend sur toute la longueur dudit élément de maintien rigide, un jeu étant ménagé à au moins une des extrémités de ladite portion de tube souple pour permettre une dilatation ou une rétractation libre de ladite portion de tube souple

6. Système d'actionnement selon l'une quelconque des revendications 1 à 5, **caractérisé en ce que** ledit tube ou lesdites portions de tube dudit élément de maintien rigide sont constitués de métal et/ou de plastique dur.

7. Système d'actionnement selon l'une quelconque des revendications 1 à 6, **caractérisé en ce que** ladite ou lesdites portions de tube souple sont constituées de plastique souple.

8. Système d'actionnement selon l'une quelconque des revendications 1 à 7, **caractérisé en ce que** ledit tube ou lesdites portions de tube dudit élément de maintien rigide sont formés de deux demi-coquilles assemblées après mise en place de ladite ou desdites portions de tube souple.

9. Système d'actionnement selon l'une quelconque des revendications 1 à 8, **caractérisé en ce qu'**il comprend un élément d'extrémité formant bouchon, traversé par ledit câble, à au moins une des extrémités dudit élément de maintien rigide.

10. Système d'actionnement selon l'une quelconque des revendications permet d'actionner un élément mobile appartenant à la famille comprenant :
- les rétroviseurs,
- les barres de tirage de store,
- les toits ouvrants,
- les baies vitrées.

11. Gaine pour système d'actionnement par câble d'un élément mobile dans un véhicule automobile, ledit câble cheminant dans ladite gaine,
**caractérisé en ce qu'**elle comporte :
- un élément de maintien rigide, comportant un tube ou des éléments de tube géométriquement indéformables ; et
- au moins une portion de tube souple, monté libre en coulissement dans ledit tube rigide, ledit câble cheminant dans la ou lesdites portions de tube souple.

12. Véhicule automobile comprenant au moins un système d'actionnement par câble du coulissement d'un élément mobile selon l'une quelconque des revendications 1 à 11.
